# EUROPÄISCHE PATENTSCHRIFT

(11) **EP 0 770 792 B1**
(45) Veröffentlichungstag und Bekanntmachung des Hinweises auf die Patenterteilung: **29.12.1999**
(21) Anmeldenummer: 96116300.3
(22) Anmeldetag: 11.10.1996
(51) Int. Cl.: F16F 9/02

(54) **Mit Fluid gefüllte Zylinder-Kolbenstangen-Einheit, insbesondere Gasfeder**
Fluid-filled cylinder-piston unit, in particular a gas spring
Unité cylindre-piston rempli avec un fluide, en particulier ressort à gaz

(30) Priorität: 25.10.1995 DE 19539616
(43) Veröffentlichungstag der Anmeldung: 02.05.1997
(73) Patentinhaber: Suspa Compart Aktiengesellschaft, 90514 Altdorf (DE)
(72) Erfinder: Peters, Michael, 70825 Korntal (DE)
(74) Vertreter: Rau, Manfred, Dr. Dipl.-Ing.

(56) Entgegenhaltungen:
- EP-A- 0 658 611
- DE-A- 4 039 845
- FR-A- 931 062

## Beschreibung

Die Erfindung betrifft eine mit Fluid gefüllte Zylinder-Kolbenstangen-Einheit, insbesondere eine Gasfeder.

Gasfedern sind allgemein bekannt. Sie weisen ein im wesentlichen zylindrisches Gehäuse auf, an dem konzentrisch eine Kolbenstange angeordnet ist, die aus einem Ende des Gehäuses abgedichtet herausgeführt ist. Am inneren Ende der Kolbenstange ist ein Kolben angebracht, der an der Innenwand des Gehäuses geführt wird. Er ist in der Regel als Dämpfungskolben ausgebildet. Um die Reibung zwischen dem Kolben und der Innenwand des Gehäuses möglichst gering zu halten, ist regelmäßig zwischen Kolben und Innenwand des Gehäuses ein geringes Spiel vorgesehen. Wenn die Gasfeder in eingebautem Zustand senkrecht steht, dann tritt die Gefahr von Geräuschen auf. Insbesondere bei in das Gehäuse eingefahrener Kolbenstange kann die Kolbenstange mit dem Kolben durch die Schwingungen des Fahrzeugs, in das sie eingebaut ist, erregt werden, wodurch der Kolben unter Erzeugung von Klappergeräuschen gegen die Innenwand des Gehäuses geschlagen wird.

Zur Vermeidung dieses Problems ist es bereits aus der DE 40 39 845 A1 bekanntgeworden, den allein gegen die Innenwand des Gehäuses anliegenden Kolbenring über Vorsprünge gegenüber dem Grundkörper des Kolbens, der vollständig frei von der Innenwand des Gehäuses ist, abzustützen und hierdurch eine Berührung zwischen Kolben und Innenwand des Gehäuses zu vermeiden. Die Herstellung des Kolbenrings ist aufwendig und außerdem sind sehr enge Toleranzen einzuhalten, was die Fertigung des Kolbens kostenaufwendig macht.

Der Erfindung liegt die Aufgabe zugrunde, eine Zylinder-Kolbenstangen-Einheit so auszugestalten, daß mit geringem Aufwand ein Klappern vermieden wird.

Diese Aufgabe wird erfindungsgemäß durch die Merkmale des Anspruches 1 gelöst. Der Kern der Erfindung liegt darin, daß der Kolben einstückig, insbesondere aus einem Kunststoff durch Spritzen, hergestellt ist, wobei mehrere Federzungen an dem Grundkörper des Kolbens ausgebildet sind. Diese Federzungen halten den Kolben selber von der Innenwand des Gehäuses fern. Die Federkraft der Federzungen kann über die Dicke ihrer Anbindung an den Grundkörper des Kolbens beeinflußt werden.

Zahlreiche vorteilhafte und zum Teil erfinderische Weiterbildungen ergeben sich aus den Unteransprüchen.

Weitere Merkmale, Vorteile und Einzelheiten ergeben sich aus der nachfolgenden Beschreibung eines Ausführungsbeispiels anhand der Zeichnung. Es zeigt
- Fig. 1: eine Gasfeder im Längsschnitt,
- Fig. 2: eine Draufsicht auf den Grundkörper des Kolbens der Gasfeder,
- Fig. 3: einen Längsschnitt durch den Grundkörper des Kolbens gemäß der Schnittlinie III-III in Fig. 2 und
- Fig. 4: den Kolben im Gehäuse in einer Teildarstellung in vergrößertem Maßstab.

Die in der Zeichnung dargestellte Gasfeder weist ein im wesentlichen aus einem zylindrischen Rohr bestehendes Gehäuse 1 mit einer Mittel-Längs-Achse 2 und einer koaxial zur Achse 2 angeordneten im Gehäuse 1 verschiebbaren Kolbenstange 3 auf. Die Kolbenstange 3 ist an einem Ende 4 des Gehäuses 1 aus diesem herausgeführt. Am anderen Ende 5 ist das Gehäuse 1 gasdicht verschlossen.

An ihrem im Gehäuse 1 befindlichen Ende ist die Kolbenstange 3 mit einem Kolben 6 versehen, der an der Innenwand 7 des Gehäuses 1 geführt ist. Der Kolben 6 ist als sogenannter Dämpfungskolben ausgebildet, und zwar mit unterschiedlicher Dämpfungscharakteristik für das Einschieben der Kolbenstange 3 in das Gehäuse 1 bzw. für das Ausfahren der Kolbenstange 3 aus dem Gehäuse 1.

Die Kolbenstange 3 ist am Ende 4 des Gehäuses 1 in einer Führung abgedichtet geführt. Die Führung selber besteht aus zwei Teilen, nämlich einer Anschlag- und Distanz-Hülse 8 mit einem Führungsabschnitt 9 für die Kolbenstange 3 und aus einem Führungs-Ring 10. Die Hülse 8 ist dem Kolben 6 zugewandt, wobei auch der Führungsabschnitt 9 dem Kolben 6 zugewandt ist. Der Führungs-Ring 10 ist dem Ende 4 des Gehäuses 1 zugewandt. Zwischen der Hülse 8 und dem Ring 10 ist eine Dichtung 11 angeordnet, die mit einem Außen-Dichtungsring 12 gegen die Innenwand 7 des Gehäuses 1 dichtend anliegt. Sie weist weiterhin einen einstückig mit dem Außen-Dichtungsring 12 ausgebildeten Innen-Dichtungsring 13 auf, der dichtend gegen die Kolbenstange 3 anliegt.

Die Hülse 8 weist eine Außen-Umfangsnut 14 auf, in die eine im Gehäuse 1 ausgebildete, zur Achse 2 hin vorspringende umlaufende Sicke 15 eingreift, wodurch die Anschlag- und Distanzhülse 8 mit dem Gehäuse 1 fest verbunden wird und wodurch ihre Lage in Richtung der Achse 2 relativ zum Gehäuse 1 definiert wird. Das Gehäuse 1 ist am Ende 4 mit einer den Führungs-Ring 10 umgreifenden Umbördelung 16 versehen, wodurch wiederum der Führungs-Ring 10 im Gehäuse 1 festgelegt wird. Durch das Einrollen der Sicke 15 einerseits und das Anbringen der Umbördelung 16 andererseits wird auch der Abstand des Führungs-Rings 10 von der Hülse 8 und damit die Vorspannung der Dichtung 11 in Richtung der Achse 2 zwischen dem Ring 10 und der Hülse 8 vorgegeben. Durch diese Vorspannung in Richtung der Achse 2 erfolgt eine Verspannung in radialer Richtung, d.h. durch diese Vorspannung in Richtung der Achse 2 wird auch die Anpreßkraft vorgegeben, mit der der Außen-Dichtungsring 11 gegen die Innenwand 7 und der Innen-Dichtungsring 13 gegen die Kolbenstange 3 anliegt.

In der Innenwand 7 des Gehäuses 1 ist ein durch eine Längssicke gebildeter Überström-Kanal 17 ausgebildet, durch den Druckgas am Kolben 6 vorbei aus dem zwischen dem Kolben 6 und dem verschlossenen Ende 5 begrenzten Gehäuseraum 18 in den zwischen dem Kolben 6 und der Führung begrenzten Gehäuseraum 19 und umgekehrt strömen kann. Das Gehäuse 1 ist teilweise oder vollständig mit Druckgas und etwas Öl als Schmiermittel gefüllt.

Das Gehäuse 1 weist an seinem Ende 5 einen angeschweißten Ring 20 mit einem Gewindezapfen 21 auf, die beide konzentrisch zur Achse 2 angeordnet sind. Auf dem Gewindezapfen 21 ist eine Kugelpfanne 22 eines Winkelgelenks aufgeschraubt, die hierzu eine zylindrische Öffnung 23 mit einem entsprechenden Innengewinde 24 aufweist. Eine solche Kugelpfanne 22 kann selbstverständlich auch auf das am Ende der Kolbenstange 3 angebrachte Gewinde 25 aufgeschraubt werden.

Die Kugelpfanne 22 weist in üblicher Weise eine Ausnehmung 26 zur Aufnahme eines nicht dargestellten Kugelzapfens auf.

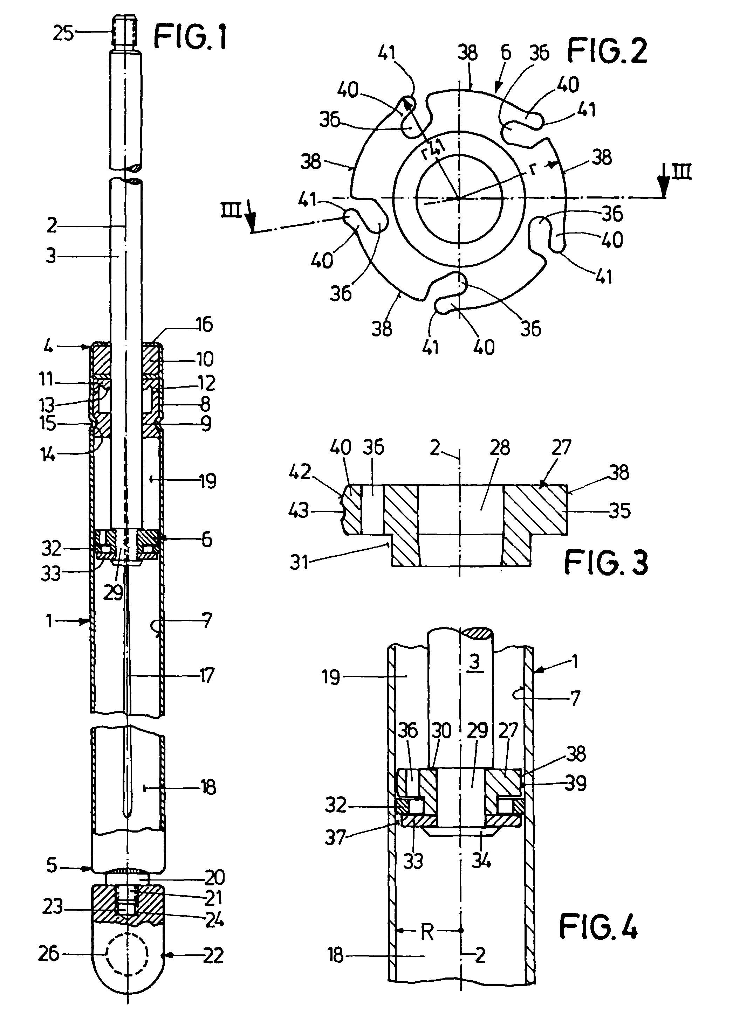

Einzelheiten der Ausgestaltung des Kolbens 6 ergeben sich aus den Fig. 2 bis 4 und der nachfolgenden Beschreibung.

Der Kolben 6 besteht aus einem Grundkörper 27, der eine zentrische Ausnehmung 28 aufweist, in die ein zapfenförmiger Abschnitt 29 der Kolbenstange 3 geschoben wird. Der Grundkörper 27 liegt gegen einen Bund 30 an, der am Übergang vom zapfenförmigen Abschnitt 29 zur Kolbenstange 3 ausgebildet ist.

In eine zum freien Ende des zapfenförmigen Abschnitts 29 hin offene ringförmige Ausnehmung 31 im Grundkörper 27 wird ein Kolbenring 32 eingesetzt. Anschließend wird eine Ringscheibe 33 auf den Abschnitt 29 bis zur Anlage gegen den Grundkörper 27 aufgeschoben. Im Anschluß daran wird das freie Ende des zapfenförmigen Abschnitts 29 vernietet, wodurch am Abschnitt 29 ein den Kolben 6 haltender Kopf 34 geformt wird.

Der Grundkörper 27 weist in seinem Ringabschnitt 35 größeren Durchmessers parallel zur Achse 2 verlaufende Kanäle 36 auf, die in die ringförmige Ausnehmung 31 einmünden, in der sich der Kolbenring 32 befindet. Der Kolbenring 32 liegt bei montierter Gasfeder dicht an der Innenwand 7 des Gehäuses 1 an, so daß zwischen seiner Außenseite und der Innenwand 7 des Gehäuses 1 bei Bewegungen der Kolbenstange 3 mit dem Kolben 6 kein Gas hindurchströmen kann. Der Kolbenring 32 liegt weiterhin in der ringförmigen Ausnehmung 31 mit axialem Spiel gegenüber der Ringscheibe 33 bzw. dem Ringabschnitt 35 des Grundkörpers 27, so daß sich beim Ausfahren der Kolbenstange 3 aus dem Gehäuse 1 der Kolbenring 32 gegen die Ringscheibe 33 legt, wodurch der schmale Spalt 37 zwischen der Ringscheibe 33 und der Innenwand 7 des Gehäuses 1 geschlossen wird. Hierbei kann also kein Gas aus dem Gehäuseraum 19 in den Gehäuseraum 18 durch den Kolben 6 strömen.

Wenn dagegen die Kolbenstange 3 mit dem Kolben 6 in das Gehäuse 1 hineingeschoben wird, dann legt sich der Kolbenring 32 gegen den Ringabschnitt 35 des Grundkörpers 27, so daß Gas aus dem Gehäuseraum 18 durch den Spalt 37, die ringförmige Ausnehmung 31 und die Kanäle 36 in den Gehäuseraum 19 strömen kann. Insoweit, als die Gasfeder mit dem Kolben 6 bis hierher beschrieben ist, ist sie allgemein bekannt.

Wie aus den Fig. 2 bis 4 ersichtlich ist, weist der Ringabschnitt 35 des Grundkörpers 27 jeweils zwischen den Kanälen 36 äußere zur Achse 2 konzentrische Teil-Zylinder-Flächen 38 auf, deren Radius r etwas kleiner ist, als der Radius R der Innenwand 7 des Gehäuses 1, so daß diese Teil-Zylinder-Flächen 38 nicht an der Innenwand 7 des Gehäuses 1 anliegen, sondern gegenüber dieser einen sehr engen Spalt 39 bilden, wie Fig. 4 entnehmbar ist.

Die Kanäle 36 werden durch einstückig mit dem Ringabschnitt 35 ausgebildete Federzungen 40 teilweise begrenzt. Diese Federzungen 40 haben - wie Fig. 2 entnehmbar ist - ein abgerundetes Ende 41, dessen Radius r₄₁ in nicht montiertem Zustand des Kolbens 6 etwas größer ist als der Radius R der Innenwand 7 des Gehäuses 1. Wie Fig. 3 entnehmbar ist, weist das abgerundete Ende 41 der Federzungen 40 parallel zur Achse 2 eine leicht ballige Begrenzungslinie 42 auf, die in montiertem Zustand des Kolbens 6 an der Innenwand 7 des Gehäuses 1 angenähert punktweise anliegt. In den abgerundeten Enden 41 der Federzungen 40 können im Bereich der balligen Begrenzungslinien 42 kleine Fettkammern 43 ausgebildet sein. Insbesondere verhindern die Federzungen 40, daß der Kolben 6 mit seinen Teil-Zylinder-Flächen 38 bei Schwingungen der Gasfeder gegen die Innenwand 7 des Gehäuses 1 schlägt. Beim Einführen des Kolbens 6 in das Gehäuse 1 werden die Federzungen 40 elastisch zu den Kanälen 36 hin verformt und liegen an der Innenwand 7 des Gehäuses 1 an. Die Teil-Zylinder-Flächen 38 liegen dagegen nicht an der Innenwand 7 des Gehäuses 1 an. Damit diese Verformungen möglich sind, besteht der Grundkörper 27 des Kolbens 6 aus einem geeigneten hartelastischen Kunststoff, beispielsweise einem Polyamid. Die Federzungen 40 liegen mit leichter Vorspannung an der Innenwand 7 des Gehäuses 1 an. Aufgrund der balligen Ausgestaltung der Begrenzungslinien 42 kann der Kolben 6 auch Kippbewegungen um die Achse 2 ausführen, ohne daß Verkantungen der Federzungen 40 gegenüber der Innenwand 7 des Gehäuses 1 auftreten. Die Teil-Zylinder-Flächen 38 des Kolbens 6 kommen auch bei solchen Verkantungen nicht mit der Innenwand 7 in Berührung.

## Patentansprüche

1. Mit Fluid gefüllte Zylinder-Kolbenstangen-Einheit, insbesondere Gasfeder, mit folgenden Merkmalen:
- ein eine Mittel-Längs-Achse (2) aufweisendes, im wesentlichen zylindrisches Gehäuse (1), das ein verschlossenes erstes Ende (5) und ein zweites Ende (4) und eine Innenwand (7) aufweist,
- eine teilweise im Gehäuse (1) und teilweise außerhalb des Gehäuses (1) koaxial zur Mittel-Längs-Achse (2) angeordnete Kolbenstange (3),
- eine am zweiten Ende (4) des Gehäuses (1) angeordnete Führung zur Führung und Abdichtung der Kolbenstange (3) in Richtung der Mittel-Längs-Achse (2), und
- ein an der Kolbenstange (3) angebrachter, der Innenwand (7) zugeordneter Kolben (6), dadurch gekennzeichnet, daß
der Kolben (6) einen Spalt (39) zur Innenwand (7) des Gehäuses (1) freilassende, über seinen Umfang verteilte Teil-Flächen (38) und an der Innenwand (7) des Gehäuses (1) federnd anliegende Federzungen (40) aufweist.

2. Zylinder-Kolbenstangen-Einheit nach Anspruch 1, wobei die Federzungen (40) im Kolben (6) ausgebildete Kanäle (36) zur Innenwand (7) des Gehäuses (1) teilweise begrenzen.

3. Zylinder-Kolbenstangen-Einheit nach Anspruch 1 oder 2, wobei die Federzungen (40) an der Innenwand (7) des Gehäuses (1) anliegende, im Querschnitt abgerundete Enden (41) aufweisen.

4. Zylinder-Kolbenstangen-Einheit nach einem der Ansprüche 1 bis 3, wobei die Federzungen (40) jeweils mit einer balligen Begrenzungslinie (42) an der Innenwand (7) des Gehäuses (1) anliegen.

5. Zylinder-Kolbenstangen-Einheit nach einem der Ansprüche 1 bis 4, wobei die Teil-Flächen als Teil-Zylinder-Flächen (38) ausgebildet sind.

6. Zylinder-Kolbenstangen-Einheit nach einem der Ansprüche 1 bis 5, wobei die Federzungen (40) einstückig mit einem die Teil-Flächen (38) aufweisenden Grundkörper (27) des Kolbens (6) ausgebildet sind.

7. Zylinder-Kolbenstangen-Einheit nach einem der Ansprüche 1 bis 6, wobei der einstückig mit den Federzungen (40) ausgebildete Teil (Grundkörper 27) des Kolbens (6) aus Kunststoff besteht.

## Claims

1. A fluid-filled unit of a cylinder and a piston rod, in particular a gas spring, comprising the following features:
- a substantially cylindrical housing (1), which has a central longitudinal axis (2), a closed first end (5), and a second end (4), and an inside wall (7),
- a piston rod (3), which is disposed partially inside the housing (1) and partially outside the housing (1) coaxially to the central longitudinal axis (2),
- a guide disposed on the second end (4) of the housing (1) for the guidance and sealing of the piston rod (3) in the direction of the central longitudinal axis (2), and
- a piston (6), which is mounted on the piston rod (3) and allocated to the inside wall (7), characterized in that
the piston (6) has partial faces (38), which are distributed over its circumference and leave open a gap (39) towards the inside wall (7) of the housing (1), and flexible tongues (40), which flexibly rest on the inside wall (7) of the housing (1).

2. A unit of a cylinder and a piston rod according to claim 1, wherein, towards the inside wall (7) of the housing (1), the flexible tongues (40) partially define ducts (36) formed in the piston (6).

3. A unit of a cylinder and a piston rod according to claim 1 or 2, wherein the flexible tongues (40) have ends (41) rounded in cross-section, which rest on the inside wall (7) of the housing (1).

4. A unit of a cylinder and a piston rod according to one of claims 1 to 3, wherein a crowned boundary line (42) of the flexible tongues (40) rests on the inside wall (7) of the housing (1).

5. A unit of a cylinder and a piston rod according to one of claims 1 to 4, wherein the partial faces are partial cylinder faces (38).

6. A unit of a cylinder and a piston rod according to one of claims 1 to 5, wherein the flexible tongues (40) are formed in one piece with a piston (6) basic body (27) which exhibits the partial faces (38).

7. A unit of a cylinder and a piston rod according to one of claims 1 to 6, wherein the part (basic body 27) of the piston (6) that is formed in one piece with the flexible tongues (40) consists of plastic material.

## Revendications

1. Unité à piston-et-cylindre remplie avec un fluide, en particulier ressort à gaz, présentant les éléments suivants :
- un boîtier (1) sensiblement cylindrique qui comprend un axe longitudinal central (2) et qui présente une première extrémité fermée (5) et une seconde extrémité (4) et une paroi intérieure (7),
- une tige de piston (3) agencée en partie dans le boîtier (1) et en partie à l'extérieur du boîtier (1), coaxialement à l'axe longitudinal central (2),
- un guidage agencé à la seconde extrémité (4) du boîtier (1) et destiné à guider et à étancher la tige de piston (3) en direction de l'axe longitudinal central (2), et
- un piston (6) agencé sur la tige de piston (3) et associé à la paroi intérieure (7),
caractérisée en ce que
le piston (6) comprend des surfaces partielles (38) réparties à sa périphérie, qui dégagent une fente (39) par rapport à la paroi intérieure (7) du boîtier (1), et des languettes élastiques (40) qui s'appuient élastiquement contre la paroi intérieure (7) du boîtier (1).

2. Unité à piston-et-cylindre selon la revendication 1, dans laquelle les languettes élastiques (40) délimitent partiellement des canaux (36), ménagés dans le piston (6), par rapport à la paroi intérieure (7) du boîtier (1).

3. Unité à piston-et-cylindre selon l'une ou l'autre des revendications 1 et 2, dans laquelle les languettes élastiques (40) présentent des extrémités (41) de section arrondie appliquées contre la paroi intérieure (7) du boîtier (1).

4. Unité à piston-et-cylindre selon l'une quelconque des revendications 1 à 3, dans laquelle les languettes élastiques (40) s'appuient chacune par une ligne de limitation bombée (42) contre la paroi intérieure (7) du boîtier (1).

5. Unité à piston-et-cylindre selon l'une quelconque des revendications 1 à 4, dans laquelle les surfaces partielles sont réalisées sous forme de surfaces partielles cylindriques (38).

6. Unité à piston-et-cylindre selon l'une quelconque des revendications 1 à 5, dans laquelle les languettes élastiques (40) sont réalisées en une seule pièce avec un corps de base (27) du piston (6), ledit corps de base présentant les surfaces partielles (38).

7. Unité à piston-et-cylindre selon l'une quelconque des revendications 1 à 6, dans laquelle la partie (corps de base 27) du piston (6) réalisée en une seule pièce avec les languettes élastiques (40) est constituée en matière plastique.
